(19) Europäisches Patentamt
European Patent Office
Office européen des brevets

(11) **EP 2 043 252 A1**

(12) **EUROPEAN PATENT APPLICATION**

(43) Date of publication:
**01.04.2009 Bulletin 2009/14**

(51) Int Cl.:
*H02P 6/00* (2006.01)      *B62D 5/04* (2006.01)

(21) Application number: **08165124.2**

(22) Date of filing: **25.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.09.2007   JP 2007249611**

(71) Applicant: **JTEKT CORPORATION**
**Chuo-ku**
**Osaka-shi**
**Osaka 542-8502 (JP)**

(72) Inventor: **Suzuki, Hiroshi**
**Chuo-ku**
**Osaka-shi**
**Osaka 542-8502 (JP)**

(74) Representative: **TBK-Patent**
**Bavariaring 4-6**
**80336 München (DE)**

(54) **Motor controller and electric power steering apparatus**

(57)     A microcomputer 18 includes a current restriction value calculation section 31 and a current restriction section 32. The current restriction value calculation section 31 calculates a motor current value corresponding to a maximum power supply current value, which has been set in advance. The current restriction value calculation section 31 then converts the motor electric current into a q-axis current value Iq and outputs the converted value as a current restriction value Iq_max. The current restriction section 32 restricts a q-axis current command value Iq* provided by a current command calculation section 23 to a value less than or equal to the current restriction value Iq_max. The current restriction section 32 then provides the restricted q-axis current command value Iq** to a motor control signal generation section 24.

**Fig.2**

**Description**

BACKGROUND OF THE INVENTION

The present invention relates to a motor controller and an electric power steering apparatus using the motor controller.

Typically, an electric apparatus driven by a motor, such as an electric power steering apparatus or a variable transmission ratio apparatus, includes a motor controller controlling the motor. The motor controller has a drive circuit arranged between an on-vehicle power supply (a battery) and control means outputting a motor control signal to the drive circuit.

Generally, the motor controller detects an excessive current supply to an object to drive, or an overcurrent. Based on the detection of the overcurrent, the controller detects a highly urgent problem such as a short circuit of any one of switching elements forming the drive circuit (see, for example, Japanese Laid-Open Patent Publication No. 2003-219675). In this case, the controller quickly carries out failsafe operation to suspend the supply of the drive power to the motor.

The aforementioned electric apparatus of a vehicle, which employs the motor controller, may have to operate under inconstant conditions (including the voltage of the power supply and the angular velocity of the motor). This may lead to generation of the overcurrent, despite the fact that there is no particular problem occurring in the electric apparatus. The occurrence of overcurrent is taken into account when the electric apparatus is designed. Specifically, the cables and switching elements that configure the drive circuit and the power supply line between the drive circuit and the battery, which are employed in the electric apparatus, have a rated current higher than a current generated in a normal state. This increases the weight of the electric apparatus and raises the costs.

SUMMARY OF THE INVENTION

Accordingly, it is an objective of the present invention to provide a motor controller and an electric power steering apparatus that ensure an improved reliability without raising the rated currents of cables and switching elements forming a power supply line and a drive circuit.

To achieve the foregoing objective and in accordance with a first aspect of the present invention, a motor controller including a motor, a direct current power supply, a drive circuit, a control means, power supply voltage detecting means, and angular velocity detecting means is provided. The direct current power supply is connected to the motor via a power supply line. The drive circuit is connected to the power supply line between the motor and the direct current power supply. The drive circuit generates a drive power to be supplied to the motor. The drive power includes a motor current value. The control means is connected to the drive circuit to control the drive circuit by providing a motor control signal to the drive circuit. The control means calculates a motor current command value as a target value of a current to be supplied to the motor. The control means generates the motor control signal to perform a current feedback control such that an actual motor current value follows the motor current command value. The power supply voltage detecting means detects a voltage of the direct current power supply. The angular velocity detecting means detects an angular velocity of the motor. The current supplied to the drive circuit has a predetermined maximum current value allowable for the drive circuit. The control means calculates the motor current value corresponding to the predetermined maximum current value based on the detected power supply voltage and the detected motor angular velocity, and the control means restricts the motor current value to a value less than or equal to the calculated motor current value.

In accordance with a second aspect of the present invention, an electric power steering apparatus including the motor controller according to the first aspect of the present invention is provided.

Other aspects and advantages of the present invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a perspective view schematically showing an electric power steering apparatus (EPS) according to a preferred embodiment of the present invention;
Fig. 2 is a block diagram representing control of the EPS shown in Fig. 1;
Fig. 3 is a block diagram representing the electric configuration of the EPS shown in Fig. 1;
Fig. 4 is a graph representing the relationship between the current value and the motor angular velocity;
Fig. 5 is a block diagram representing control of an EPS according to another embodiment of the present invention;

and

Fig. 6 is a graph representing the relationship between the power supply voltage and the required maximum power.

DETAILED DESCRIPTION OF THE PREFERRED EMBODIMENTS

A column mounted type electric power steering apparatus (EPS) 1 according to a first embodiment of the present invention will now be described with reference to the attached drawings.

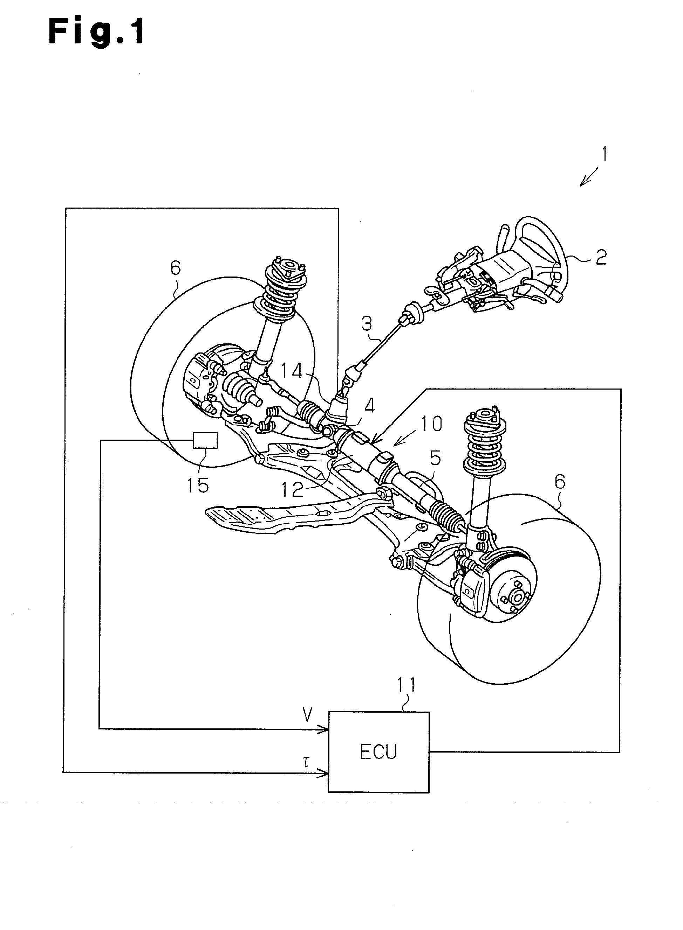

Fig. 1 is a view schematically showing the configuration of the EPS 1 of the present embodiment. As illustrated in the drawing, a steering shaft 3 to which a steering wheel 2 is fixed is connected to a rack 5 through a rack and pinion mechanism 4. Rotation of the steering shaft 3 caused by steering the steering wheel 2 is converted into linear reciprocation of the rack 5 through the rack and pinion mechanism 4. This changes the steering angles of steerable wheels 6.

The EPS 1 includes an EPS actuator 10 serving as a steering force assist device and an electronic control unit (ECU) 11. The EPS actuator 10 applies assist force to the steering system to assist in steering. The ECU controls the operation of the EPS actuator 10.

The EPS actuator 10 of the present embodiment is a rack type EPS actuator including the rack 5 and a motor 12, which is a drive source of the rack 5. Assist torque generated by the motor 12 is transmitted to the rack 5 through a ball and screw mechanism (not shown). In this embodiment, the motor 12 is a brushless motor and rotated as driven by drive power of three phases (U, V, and W phases) supplied by the ECU 11. The ECU 11 serving as a motor controller regulates the assist force applied to the steering system by adjusting the assist torque produced by the motor 12 (power assist control).

A torque sensor 14 and a vehicle speed sensor 15 are connected to the ECU 11. Based on the steering torque $\tau$ detected by the torque sensor 14 and the vehicle speed V detected by the vehicle speed sensor 15, the ECU 11 operates the EPS actuator 10, or performs the power assist control.

The electric configuration of the EPS 1 will hereafter be explained.

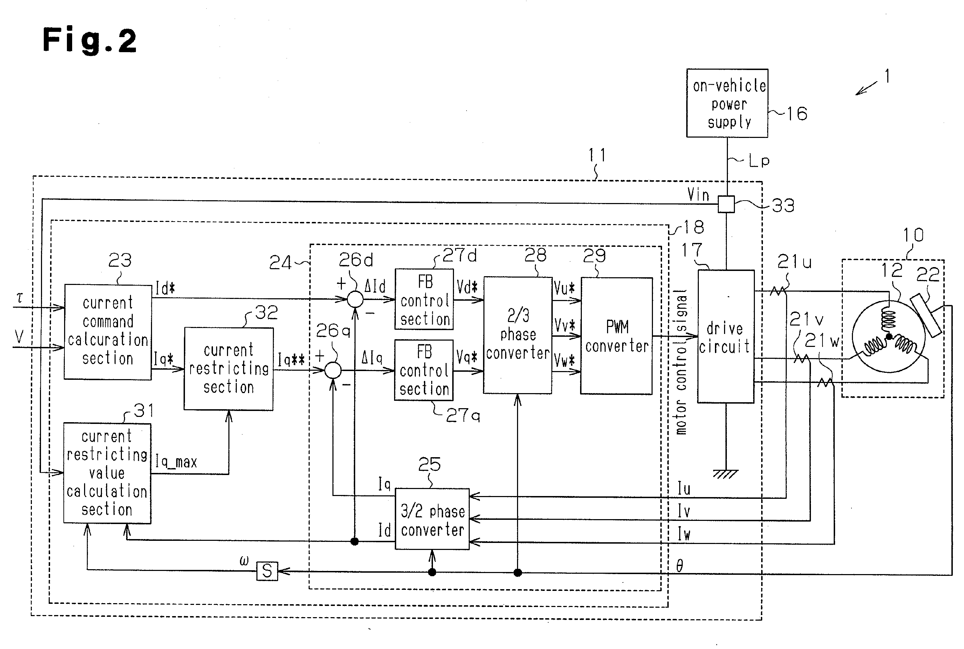

Fig. 2 is a block diagram representing control of the EPS 1. With reference to the diagram, the ECU 11 includes a drive circuit 17 driving the motor 12 and a microcomputer 18 serving as control means controlling the drive circuit 17 using a motor control signal. The drive circuit 17 is provided in a power supply line Lp between the motor 12, or the drive source of the EPS actuator 10, and an on-vehicle power supply (a battery) 16, which is a direct current power supply. The drive circuit 17 produces the drive power supplied to the motor 12.

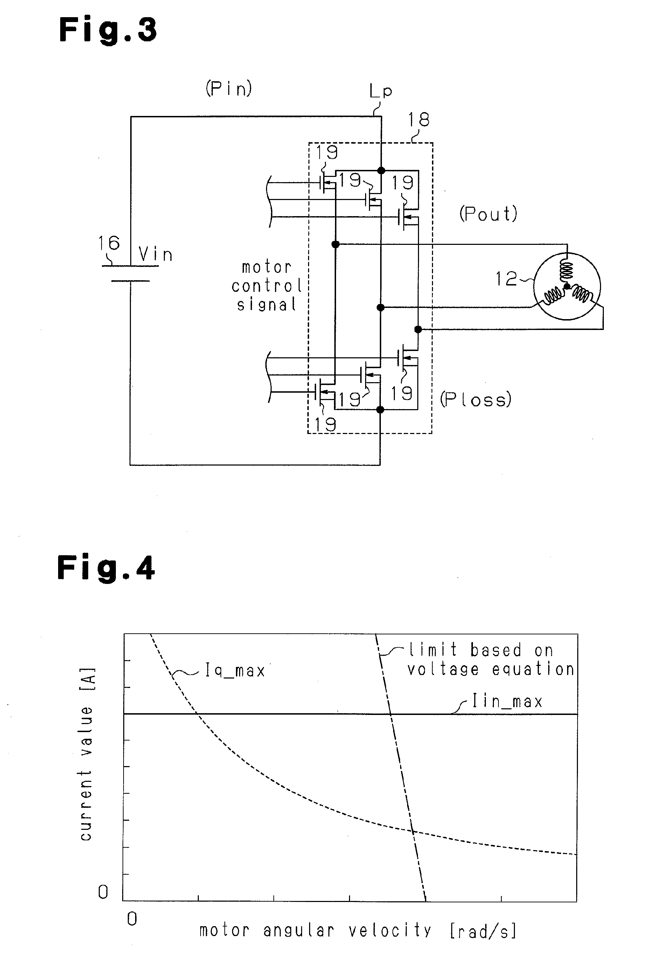

With reference to Fig. 3, the drive circuit 17 is a known three-phase PWM inverter (pulse width modulated inverter), which is formed by six switching elements 19. Every pair of switching elements 19 that are connected in series forms one basic unit (one arm). That is, the switching elements 19 are formed by three arms that are connected in parallel in correspondence with the three phases. A motor control signal output by the microcomputer 18 defines the onduty ratio of each of the switching elements 19 forming the drive circuit 17. The motor control signal is then applied to the gate terminal of each switching element 19. In response to the motor control signal, the switching element 19 is turned selectively on and off. This converts the direct current voltage of the power supply 16 to the drive power of the three phases (the U, V, and W phases). The drive power is then fed to the motor 12.

As illustrated in Fig. 2, current sensors 21u, 21v, 21w, which detect current values Iu, Iv, Iw of the corresponding phases, and a rotation angle sensor 22 detecting the rotation angle $\theta$ of the motor 12 are connected to the ECU 11. The microcomputer 18 calculates the motor control signal using the current values Iu, Iv, Iw of the motor 12 and the rotation angle $\theta$, which are detected by the corresponding sensors 21u, 21v, 21w, and 22, and the aforementioned steering torque $\tau$ and vehicle speed V. The microcomputer 18 then provides the motor control signal to the drive circuit 17.

Specifically, the microcomputer 18 includes a current command calculation section 23 and a motor control signal generation section 24. The current command calculation section 23 calculates the assist force to be applied to the steering system, which is a motor current command value as a control target of motor torque. The motor control signal generation section 24 generates the motor control signal based on the motor current command value obtained by the current command calculation section 23.

Based on the steering torque $\tau$ and the vehicle speed V, which are detected by the torque sensor 14 and the vehicle speed sensor 15, respectively, the current command calculation section 23 calculates a d-axis current command value Id* and a q-axis current command value Iq*, and provides the current command values Id*, Iq* to the motor control signal generation section 24. The motor control signal generation section 24 receives, along with the d-axis current command value Id* and the q-axis current command value Iq* (Iq**), the current values Iu, Iv, Iw detected by the corresponding current sensors 21u, 21v, 21w and the rotation angle $\theta$ detected by the rotation angle sensor 22. The motor control signal generation section 24 generates the motor control signal by performing current feedback control in a d-q coordinate system using the current values Iu, Iv, Iw and the rotation angle $\theta$ (the electric angle).

Specifically, in the motor control signal generation section 24, the current values Iu, Iv, Iw are input to a three phase/two phase converter 25 together with the rotation angle $\theta$. The three phase/two phase converter 25 converts the current values Iu, Iv, Iw to a d-axis current value Id and a q-axis current value Iq. The d-axis current command value Id* and the q-axis current command value Iq* (Iq**), which are obtained by the current command calculation section 23, are sent to corresponding subtractors 26d, 26q, along with the d-axis current value Id and the q-axis current value Iq. In the present embodiment, the current command calculation section 23 outputs "0" as the d-axis current command value Id* (Id*=0) in a normal control state.

A d-axis current deviation ΔId and a q-axis current deviation ΔIq determined by the subtractor 26d and the subtractor 26q, respectively, are each provided to a corresponding one of FB control sections 27d, 27q. Each one of the FB control sections 27d, 27q carries out feedback control in such a manner that the corresponding one of the d-axis current value Id and the q-axis current value Iq each representing an actual current, follows the associated one of the d-axis current command value Id* and the q-axis current command value Iq* (Iq**), which are provided by the current command calculation section 23.

Specifically, the FB control section 27d and the FB control section 27q multiply the d-axis current deviation ΔId and the q-axis current deviation ΔIq, respectively, by a predetermined FB gain (a predetermined feedback gain, which is a PI gain (proportional-integral gain)), thereby calculating a d-axis voltage command value Vd* and a q-axis voltage command value Vq*, respectively. The d-axis voltage command value Vd* and the q-axis voltage command value Vq*, which are obtained by the corresponding FB control sections 27d, 27q, are provided to a two phase/three phase converter 28 along with the rotation angle θ. The two phase/three phase converter 28 converts the voltage command values Vd*, Vq* to three-phase voltage command values Vu*, Vv*, Vw*.

The PWM converter 29 receives the voltage command values Vu*, Vv*, Vw*, which are determined by the two phase/three phase converter 28, and generates the motor control signal in correspondence with the voltage command values Vu*, Vv*, Vw*. The microcomputer 18 outputs the motor control signal to the gate terminal of each of the switching elements 19 forming the drive circuit 17. The drive circuit 17 is thus operated, so that supply of the drive power to the motor 12 is regulated.

(Overcurrent Suppression Control)

The following is operation corresponding to the overcurrent suppression control according to the present embodiment.

As has been stated in the BACKGROUND OF THE INVENTION section, the motor controller may have to operate under inconstant conditions (including the voltage of the power supply and the angular velocity of the motor). This may lead to generation of an overcurrent flowing from the on-vehicle power supply to the drive circuit, despite the fact that no particular problem has occurred in the motor controller. Particularly, if the voltage of the power supply drops, the voltage drop may cause short supply of the power to the drive circuit 17. To compensate for such short supply, the switching elements forming the drive circuit must be turned on for a prolonged time (in other words, the ON duty ratio is raised). This may cause the overcurrent, disadvantageously leading to a further drop of the voltage of the power supply.

To solve this problem, in the present embodiment, a maximum power supply current value Iin_max is set in advance as a value acceptable for a power supply current Iin supplied from the on-vehicle power supply 16 to the drive circuit 17. The microcomputer 18 serving as the control means calculates a motor current value Im corresponding to the maximum power supply current value Iin_max. The microcomputer 18 restricts the motor current command value (the q-axis current command value Iq*), which is used in the current feedback control performed in generation of the motor control signal, to a value less than or equal to the maximum power supply current value Iin_max. This prevents an overcurrent from occurring when the motor 12 is in a normal operating state.

The "motor current value" herein represents the value of the current supplied from the drive circuit 17 to the motor 12 on the assumption that the motor 12 is a direct current motor (see the expressions (3) to (5), which will be described later). In other words, since the motor 12 of the present embodiment is a brushless motor, the motor current value Im is represented by the square root of the square sum of the d-axis current value Id and the q-axis current value Iq, or $Im = \sqrt{Id^2 + Iq^2}$. If the equation: Id = 0 is satisfied, the equation: Im=Iq is satisfied. In the d-q coordinate system, the d-axis current is a component corresponding to excitement and the q-axis current is a component corresponding to load torque. Accordingly, in the present embodiment, the value obtained by converting the motor current value Im corresponding to the maximum power supply current value Iin_max into the q-axis current value Iq corresponds to a current restriction value Iq_max.

Specifically, with reference to Fig. 2, the microcomputer 18 includes a current restriction value calculation section 31. The current restriction value calculation section 31 calculates the motor current value Im corresponding to the maximum power supply current value Iin_max, which has been set in advance. The current restriction value calculation section 31 generates the current restriction value Iq_max, or the value obtained by converting the motor current value Im into the q-axis current value Iq. A current restriction section 32 is arranged between the current command calculation section 23 and the motor control signal generation section 24. In the present embodiment, the current restriction section 32 restricts the q-axis current command value Iq* generated by the current command calculation section 23 to a value less than or equal to the current restriction value Iq_max. The restricted value, which is the q-axis current command value Iq**, is provided to the motor control signal generation section 24.

More specifically, in the present embodiment, the ECU 11 has a voltage sensor 33, which is arranged in the power supply line Lp between the on-vehicle power supply 16 and the drive circuit 17. A power supply voltage Vin detected by the voltage sensor 33 is provided to the microcomputer 18. The microcomputer 18 determines the angular velocity $\omega$ of the motor 12 by differentiating the rotation angle $\theta$, which is detected by the rotation angle sensor 22. In other words, in the present embodiment, the voltage sensor 33 functions as power supply voltage detection means and the rotation angle sensor 22 and the microcomputer 18 each function as angular velocity detection means. The microcomputer 18, or the current restriction value calculation section 31, calculates the current restriction value Iq_max based on the power supply voltage Vin, the angular velocity $\omega$, and the d-axis current value Id, which have been detected.

Specifically, the current restriction value calculation section 31 calculates the current restriction value Iq_max using the following expression (1).

$$I_{q\_\max} = \frac{-K_t\omega + \sqrt{(K_t\omega)^2 - 4R(RI_d^2 - V_{in}I_{in\_\max})}}{2R} \quad \ldots(1)$$

(Kt: torque constant, R: motor resistance)

A power input Pin (Fig. 3) supplied to the drive circuit 17, a power output Pout (Fig. 3) output from the drive circuit 17, and a power loss Ploss (Fig. 3) in the drive circuit 17 satisfy the relationship represented by the following expression (2).

$$Pin = Pout + Ploss \ldots(2)$$

Accordingly, the following expression (6) is obtained by assigning the power input Pin, the power output Pout, and the power loss Ploss, which are represented by the expression (3), the expression (4), and the expression (5), respectively, to the expression (2) and simplifying the expression.

$$Pin = Vin \times Iin\ldots(3)$$

$$Pout = Kt \times Im \times \omega\ldots(4)$$

$$Ploss = R \times Im^2\ldots(5)$$

$$Iin = (Kt \times Im \times \omega + R \times Im^2)/Vin\ldots(6)$$

The above-described expression (1) is obtained by determining the current restriction value Iq_max corresponding to the maximum power supply current value Iin_max using the expression (6), in such a manner that the power supply current Iin becomes a value less than or equal to the maximum power supply current value Iin_max.

Operation and advantages of the ECU 11, or the motor controller of the present embodiment, will hereafter be described.

As represented by the expression (6), if the power output Pout and the power loss Ploss are constant, the power supply current Iin becomes greater, that is the overcurrent becomes more likely to happen, as the power supply voltage Vin becomes less. Further, if the power input Pin is constant, the power supply current Iin becomes greater, that is, the overcurrent becomes more likely to happen, as the angular velocity ω of the motor 12 becomes greater.

However, in the present embodiment, the current restriction value Iq_max, which is determined using the expression (1), becomes less to such an extent that the power supply current Iin exceeding the maximum power supply current value Iin_max, which has been set in advance, is not generated, as the angular velocity ω becomes greater as shown in Fig. 4. In the current feedback control for supply of the drive power to the motor 12, the q-axis current command value Iq* is restricted to the value corresponding to the maximum power supply current value Iin_max, or a value less than or equal to the current restriction value Iq_max. This prevents the generation of the power supply current Iin exceeding the maximum power supply current value Iin_max, which is the over current, regardless of the power supply voltage Vin and the angular velocity ω. If the maximum power supply current value Iin_max is less than the current restriction value Iq_max, the q-axis current command value Iq* is restricted to a value less than or equal to the current restriction value Iq_max.

Accordingly, even when the motor controller operates under inconstant conditions including change of the power supply voltage and that of the motor angular velocity, the overcurrent is prevented from being generated in a normal operating state. The motor is thus stably controlled. As a result, improved reliability is ensured without raising the rated currents of the cables and the switching elements 19, which configure the power supply line Lp and the drive circuit 17. This decreases the weight of each one of the cables and the weight of each switching element 19 and lowers the costs of the cables and the switching elements 19.

The present invention may be embodied in the following forms as a second embodiment.

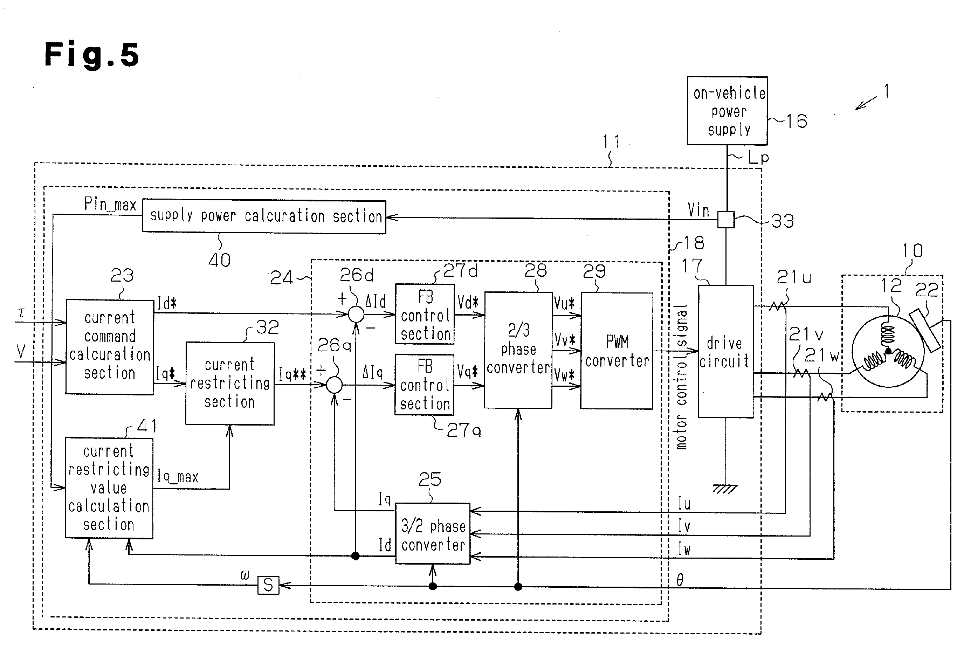

In the above-described first embodiment, the current restriction value calculation section 31 calculates the current restriction value Iq_max based on the power supply voltage Vin, the angular velocity ω, and the d-axis current value Id. Instead, in the second embodiment, the microcomputer 18 includes a supply power calculation section 40, as illustrated in Fig. 5. The supply power calculation section 40 calculates a required maximum power Pin_max supplied to the drive circuit 17 using the power supply voltage Vin. The current restriction calculation section 41 then determines the current restriction value Iq_max using the required maximum power Pin_max.

The required maximum power Pin_max is represented by the following expression: Pin_max = Vin x Iin_max, obtained from the expression (3). The following expression (7) is obtained by assigning this expression to the expression (1).

$$I_{q\_max} = \frac{-K_t\omega + \sqrt{(K_t\omega)^2 - 4R(RI_d{}^2 - P_{in\_max})}}{2R} \quad \cdots (7)$$

First, an appropriate value of the required maximum power Pin_max corresponding to the power supply voltage Vin is calculated. The current restriction value Iq_max is then determined by assigning the required maximum power Pin_max to the expression (7). The q-axis current command value Iq* is thus restricted to a value less than or equal to the current restriction value Iq_max. As a result, the second embodiment ensures the advantages equivalent to those of the first embodiment.

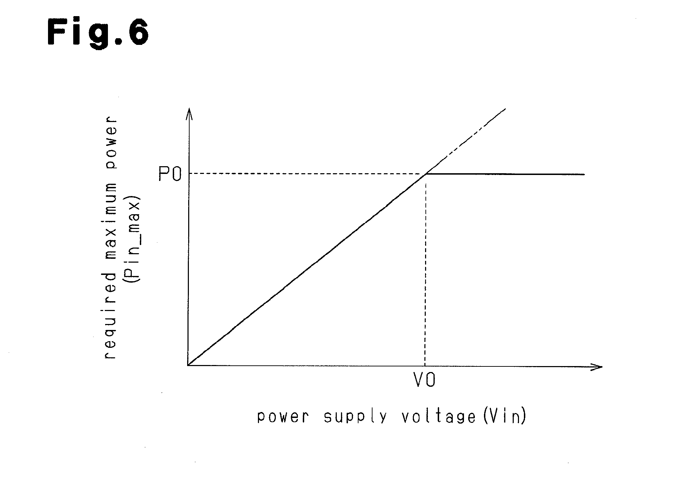

Specifically, as illustrated in Fig. 6, the required maximum power Pin_max that is proportional to the power supply voltage Vin is calculated using the expression (3). This prevents generation of the power supply current Iin exceeding the maximum power supply current value Iin_max, which has been set in advance, regardless of the power supply voltage Vin.

If the power supply voltage Vin exceeds a rated voltage V0 (for example, 12 V) that has been set in advance, the required maximum power Pin_max may be maintained constantly at a value P0 corresponding to the rated power (for example, 600 W) of the motor 12.

Specifically, if a system is designed on the assumption that the power supply voltage Vin is maintained constantly at the rated voltage V0, it is likely that the drive power exceeding the rated power of the motor is supplied to the motor when the power supply voltage Vin exceeds the rated voltage V0. This may disadvantageously lead to excessive heating of the motor. However, the above-described configuration prevents production of such excessively great power. This ensures further improved reliability of the motor 12.

In the illustrated embodiments, although not particularly stated, the terms including the d-axis current value Id are eliminated from the expressions (1) and (7) if specific control such as field weakening control, which changes the d-axis current, is not carried out, that is, if the d-axis current command value Id* is maintained constantly at "0" (Id* = 0).

Although the present invention is embodied as the motor controller for the brushless motor, the invention may be used as a motor controller for a direct current motor with brushes. In this case, the d-axis current value Id is eliminated from the expressions (1) and (7) before the expressions (1) and (7) are used.

Although the invention is embodied as the electric power steering apparatus (EPS), the invention may be used as a motor controller employed for purposes other than the EPS.

Therefore, the present examples and embodiments are to be considered as illustrative and not restrictive and the invention is not to be limited to the details given herein, but may be modified within the scope and equivalence of the appended claims.

A microcomputer 18 includes a current restriction value calculation section 31 and a current restriction section 32. The current restriction value calculation section 31 calculates a motor current value corresponding to a maximum power supply current value, which has been set in advance. The current restriction value calculation section 31 then converts the motor electric current into a q-axis current value Iq and outputs the converted value as a current restriction value Iq_max. The current restriction section 32 restricts a q-axis current command value Iq* provided by a current command calculation section 23 to a value less than or equal to the current restriction value Iq_max. The current restriction section 32 then provides the restricted q-axis current command value Iq** to a motor control signal generation section 24.

**Claims**

1. A motor controller comprising:

   a motor (12);
   a direct current power supply (16) connected to the motor (12) via a power supply line (Lp);
   a drive circuit connected to the power supply line (Lp) between the motor (12) and the direct current power supply (16), the drive circuit (17) generating a drive power to be supplied to the motor (12), the drive power including a motor current value;
   a control means (18) connected to the drive circuit (17) to control the drive circuit (17) by providing a motor control signal to the drive circuit (17), wherein the control means (18) calculates a motor current command value as a target value of a current to be supplied to the motor (12), the control means (18) generates the motor control signal to perform a current feedback control such that an actual motor current value follows the motor current command value;
   power supply voltage detecting means (33) that detects a voltage (Vin) of the direct current power supply (16); and
   angular velocity detecting means (18, 22) that detects an angular velocity ($\omega$) of the motor (12),

   wherein the current supplied to the drive circuit (17) has a predetermined maximum current value (Iin_max) allowable for the drive circuit (17), and
   the motor controller being **characterized in that** the control means (18) calculates the motor current value (Iq_max) corresponding to the predetermined maximum current value (Iin_max) based on the detected power supply voltage (Vin) and the detected motor angular velocity (w), and the control means (18) restricts the motor current value (Iq*, Iq**) to a value less than or equal to the calculated motor current value (Iq_max).

2. The motor controller according to claim 1, **characterized in that** the control means (18) calculates a required maximum power (Pin_max) to be supplied to the drive circuit (17) based on the power supply voltage (Vin), and the control means (18) calculates a restriction value for the motor current value (Iq*, Iq**) based on the required maximum power (Pin_max).

3. The motor controller according to claim 2, **characterized in that** the motor has a rated power, and if the power supply voltage (Vin) exceeds a predetermined value (V0), the control means (18) calculates a value corresponding to the rated power as the required maximum power (Pin_max).

4. The motor controller according to claim 1, **characterized in that** the control means (18) performs a current feedback control in a d-q coordinate system, the motor current command value includes a d-axis current command value (Iq*) and a q-axis current command value (Id*), and the control means (18) restricts the q-axis current command value (Iq*, Iq**) to a value less than or equal to the motor current value (Iq_max) corresponding to the maximum current value (Iin_max).

5. The motor controller according to claim 1, **characterized in that** the control means (18) restricts the motor current command value (Iq*, Iq**) to a value less than or equal to the smaller one of the maximum current value (Iin_max) and the motor current value (Iq_max) corresponding to the maximum current value (Iin_max).

6. An electric power steering apparatus comprising the motor controller according to any one of claim 1 to 5.

# Fig.1

# Fig.2

EP 2 043 252 A1

# Fig.3

# Fig.4

Fig.5

# Fig.6

Europäisches
Patentamt

European
Patent Office

Office européen
des brevets

## EUROPEAN SEARCH REPORT

Application Number

EP 08 16 5124

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2005 119417 A (NSK LTD; NSK STEERING SYS CO LTD) 12 May 2005 (2005-05-12) * abstract; figures 1-12 * | 1-6 | INV. H02P6/00 B62D5/04 |
| Y | EP 1 609 695 A (FAVESS CO LTD [JP]; TOYODA MACHINE WORKS LTD [JP]; KOYO SEIKO CO [JP]) 28 December 2005 (2005-12-28) * figures 1-11 * | 1-6 | |
| Y | JP 2007 131123 A (NSK LTD) 31 May 2007 (2007-05-31) * abstract; figures 1-6 * | 1-6 | |
| A | US 4 532 567 A (KADE ALEXANDER [US]) 30 July 1985 (1985-07-30) * claims 1,2; figures 1,2 * | 1-6 | |

TECHNICAL FIELDS
SEARCHED      (IPC)

H02P
B62D

The present search report has been drawn up for all claims

| Place of search | Date of completion of the search | Examiner |
|---|---|---|
| Munich | 23 December 2008 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 08 16 5124

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2008

| Patent document cited in search report | | Publication date | Patent family member(s) | | Publication date |
|---|---|---|---|---|---|
| JP 2005119417 | A | 12-05-2005 | NONE | | |
| EP 1609695 | A | 28-12-2005 | JP | 2006014474 A | 12-01-2006 |
| | | | US | 2006009893 A1 | 12-01-2006 |
| JP 2007131123 | A | 31-05-2007 | NONE | | |
| US 4532567 | A | 30-07-1985 | DE | 3402332 A1 | 30-08-1984 |
| | | | JP | 59156863 A | 06-09-1984 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   JP 2003219675 A